# EUROPÄISCHE PATENTSCHRIFT

(11) **EP 2 365 878 B1**
(45) Veröffentlichungstag und Bekanntmachung des Hinweises auf die Patenterteilung: **06.11.2013**
(21) Anmeldenummer: 09741198.7
(22) Anmeldetag: 07.09.2009
(51) Int. Cl.: B01L 3/00

(54) **PIPETTE**
PIPETTE
PIPETTE

(30) Priorität: 17.11.2008 DE 202008015189 U
(43) Veröffentlichungstag der Anmeldung: 21.09.2011
(73) Patentinhaber: Sulzer Mixpac AG, 9469 Haag (CH)
(72) Erfinder: SÒGARO, Alberto, C., 61476 Kronberg (DE)
(74) Vertreter: advotec.
(86) Internationale Anmeldenummer: PCT/DE2009/001257
(87) Internationale Veröffentlichungsnummer: WO 2010/054609

(56) Entgegenhaltungen:
- EP-A- 1 743 618
- EP-A- 1 797 957
- WO-A-00/24514
- WO-A-02/36033
- WO-A-2008/134423
- US-A- 6 059 570

## Beschreibung

Die Erfindung betrifft eine Vorrichtung zum Auftragen einer fließfähigen Substanz, umfassend ein aus Kunststoff gefertigtes Pipettierröhrchen, das an einem Ende eine an die Umgebung führende Austragsöffnung hat.

Derartige Vorrichtungen sind aus der Praxis bekannt und werden insbesondere im Laborbereich zum Pipettieren bzw. Applizieren von Flüssigkeiten eingesetzt. In der Regel ist die Austragsöffnung hierbei an einem sich im Wesentlichen konisch verjüngenden Abschnitt des als durchgängiges Kunststoffformteil ausgebildeten Pipettierröhrchens angeordnet. Mit derartigen Pipettierröhrchen ist aber ein flächenmäßiger Auftrag der zu applizierenden Flüssigkeit ggf. schwierig zu gestalten.

Der Erfindung liegt daher die Aufgabe zugrunde, eine Vorrichtung der einleitend genannten Gattung mit verbesserten Appliziereigenschaften für ein flächenmäßiges Auftragen der zu applizierenden fließfähigen Substanz zu schaffen.

Diese Aufgabe ist erfingdungsgemäß durch die Vorrichtung mit den Merkmalen des Anspruchs 1 gelöst.

Die Erfindung hat mithin eine Vorrichtung zum Auftragen einer fließfähigen Substanz zum Gegenstand, umfassend ein aus Kunststoff gefertigtes, einstückiges Pipettierröhrchen, das an einem Ende eine an die Umgebung führende Austragsöffnung hat und an seinem anderem Ende verschlossen ist. Im Bereich der Auftragsöffnung ist eine mit der fließfähigen Substanz beaufschlagbare Applikationseinrichtung vorgesehen.

Durch die an der Austragsöffnung angeordnete Applikationseinrichtung, die durch die in dem Pipettierröhrchen vorgehaltene fließfähige Substanz beaufschlagbar ist, kann die Substanz auf einer betreffenden Applikationsfläche verstrichen werden, so dass diese in gewünschter Weise benetzt wird. Die Vorrichtung nach der Erfindung eignet sich damit insbesondere zum flächenmäßigen Auftragen einer fließfähigen Substanz.

Bei einer bevorzugten Ausführungsform der Vorrichtung nach der Erfindung ist die Applikationseinrichtung eine Beflockung des Pipettierröhrchens, die beim Austragen der fließfähigen Substanz aus dessen Innenraum mit dieser beaufschlagt wird.

Alternativ oder auch zusätzlich kann die Applikationseinrichtung ein Pinselhaar umfassen, das nach einem Spritzgießverfahren an einer die Austragsöffnung umschließenden Stirnfläche des Pipettierröhrchens angespritzt ist.

Das Pinselhaar kann in vielfältiger Weise ausgebildet sein und insbesondere aus mindestens einem Haarkranz gebildet sein, der einer Kreislinie folgend an der die Austragsöffnung umschließenden Stirnfläche des Pipettierröhrchens angeformt ist.

Um ein optimiertes Austragsverhalten der Vorrichtung nach der Erfindung zu erreichen, ist das Pipettierröhrchen als Zweikomponentenspritzgießteil ausgebildet, wobei ein erster Abschnitt des Pipettierröhrchens, der zum Austragen der fließfähigen Substanz dient, aus einem elastisch verformbaren Kunststoff gebildet ist, und ein zweiter Abschnitt, der an den ersten Abschnitt angrenzt und die Austragsöffnung aufweist, aus einem Hartkunststoff gebildet ist.

Weitere Vorteile und vorteilhafte Ausgestaltungen des Gegenstandes der Erfindung sind der Beschreibung, der Zeichnung und den Ansprüchen entnehmbar.

Ein Ausführungsbeispiel der Vorrichtung nach der Erfindung ist in der Zeichnung schematisch vereinfacht dargestellt und wird in der nachfolgenden Beschreibung näher erläutert. Es zeigt:

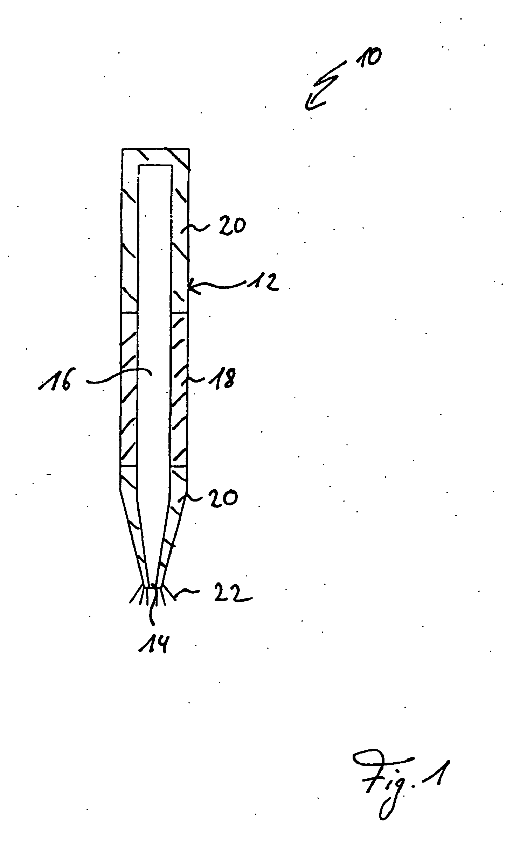

Fig. 1 einen Längsschnitt durch eine beflockte Pipette; und

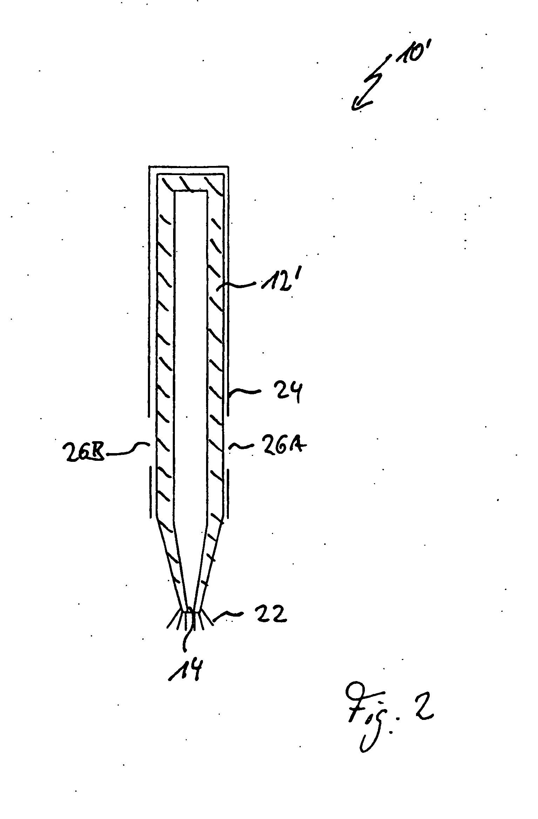

Fig. 2 eine zweite Ausführungsform einer erfindungsgemäß ausgebildeten Pipettiervorrichtung.

In der Zeichnung ist eine als Pipette ausgebildete Vorrichtung 10 zum Auftragen einer fließfähigen Substanz auf eine Applikationsfläche, beispielsweise auf einen Zahnstumpf eines Patienten oder dergleichen dargestellt. Die Pipette 10 umfasst ein Pipettierröhrchen 12, das an einer Stirnseite mit einer Austragsöffnung 14 versehen ist und an der der Austragsöffnung 14 abgewandten Stirnseite verschlossen ist. Das Pipettierröhrchen 12 weist des Weiteren einen Aufnahmeraum 16 auf, der in Fließverbindung mit der Austragsöffnung 14 steht.

Das Pipettierröhrchen 12 ist ein Zweikomponentenspritzgießteil, das einen ersten Abschnitt 18 aus einem elastisch verformbaren, weichen Kunststoff und zwei zweite Abschnitte 20 umfasst, die sich jeweils an den ersten Abschnitt 18 anschließen und aus einem Hartkunststoff gebildet sind. Der sich auf der Seite der Austragsöffnung 14 an den ersten Abschnitt 18 anschließende zweite Abschnitt 20 verjüngt sich in Richtung der Austragsöffnung 14. Eine in dem Innenraum 16 vorgehaltene Flüssigkeit kann durch Ausüben eines radialen Drucks auf den elastisch verformbaren ersten Abschnitt 18 über die Austragsöffnung 14 aus dem Pipettierröhrchen 12 ausgebracht werden.

An die Austragsöffnung 14 schließt sich an der Außenseite des Pipettierröhrchens 12 des Weiteren eine Beflockung 22 an, die auf den zweiten Abschnitt 20 des Pipettierröhrchens 12 aufgebracht ist und beim Austragen der Flüssigkeit aus dem Innenraum 16 durch Ausüben des radialen Drucks auf den ersten Abschnitt 18 mit der Flüssigkeit beaufschlagt wird. Über die Beflockung 22 kann die Flüssigkeit dann auf die Applikationsfläche aufgetragen werden.

Denkbar ist es ferner, dass das Pipettierröhrchen 12 in seinem die Austragöffnung aufweisenden Abschnitt einen beispielsweise röhrchenartigen Metalleinleger aufweist, der einerseits das Pipettierröhrchen 12 stabilisieren und andererseits Teil der Applikationseinrichtung sein kann.

Bei einer alternativen Ausführungsform einer Vorrichtung 10' nach der Erfindung ist ein aus einem weichen elastischen Kunststoff bestehendes Pipettierröhrchen 12' mit einer im Bereich seiner Austragsöffnung angeordneten Beflockung 22 in einem als Hülse dienenden Außenröhrchen 24 aus einem Hartkunststoff oder aus Metall angeordnet. Das Außenröhrchen hat zwei Ausnehmungen 26A und 26B, in die Fingerkuppen eines Benutzers zum Aufbringen eines radialen Drucks auf das innere, aus einem weichen elastischen Kunststoff bestehende Pipettierröhrchen 12' eingreifen können, so dass die fließfähige Substanz aus dem Pipettierröhrchen 12' ausgetragen und appliziert werden kann.

### Bezugszeichenliste

- 10: Pipette
- 12: Pipettierröhrchen
- 14: Austragsöffnung
- 16: Innenraum
- 18: erster Abschnitt
- 20: zweite Abschnitte
- 22: Beflockung
- 24: Außenröhrchen
- 26A, B: Ausnehmungen

## Patentansprüche

1. Vorrichtung zum Auftragen einer fließfähigen Substanz, umfassend ein aus Kunststoff gefertigtes, einstückiges Pipettierröhrchen (12), das an einem Ende eine an die Umgebung führende Austragsöffnung (14) hat und an seinem anderen Ende verschlossen ist, wobei im Bereich der Austragsöffnung (14) eine mit der fließfähigen Substanz beaufschlagbare Applikationseinrichtung (22) vorgesehen ist, **dadurch gekennzeichnet, dass** das Pipettierröhrchen (12) als Zweikomponentenspritzgießteil ausgebildet ist und einen ersten Abschnitt (18), der zum Austragen der fließfähigen Substanz dient und aus einem elastisch verformbaren Kunststoff gebildet ist, und einen zweiten Abschnitt (20) umfasst, der die Austragsöffnung (14) aufweist und aus einem Hartkunststoff gebildet ist.

2. Vorrichtung nach Anspruch 1, **dadurch gekennzeichnet, dass** die Applikationseinrichtung (22) eine Beflockung des Pipettierröhrchens (12) ist, die beim Austragen der fließfähigen Substanz aus dessen Innenraum (16) mit dieser beaufschlagt wird.

3. Vorrichtung nach Anspruch 1, **dadurch gekennzeichnet, dass** die Applikationseinrichtung ein Pinselhaar umfasst, das an einer die Austragsöffnung umschließenden Stirnfläche des Pipettierröhrchens angespritzt ist.

4. Vorrichtung nach Anspruch 3; **dadurch gekennzeichnet, dass** das Pinselhaar aus mindestens einem Haarkranz gebildet ist.

5. Vorrichtung nach einem der Ansprüche 1 bis 4, **dadurch gekennzeichnet, dass** das Pipettierröhrchen (12') in einem Außenröhrchen (24) angeordnet ist, das mindestens zwei Ausnehmungen (26A, 26B) zum Ausüben eines radialen Drucks auf das Pipettierröhrchen (12') aufweist.

## Claims

1. A device for applying a flowable substance, comprising a pipetting tube (12) manufactured from plastic as a single piece that has, on one end, a dispensing opening (14) leading to the environment and is closed off on its other end, wherein, in the region of the dispensing opening (14), an applicator unit (22) is provided that can be wetted with the flowable substance, **characterised in that** said pipetting tube (12) is configured as a two-component injection-moulded part and comprises a first portion (18), which serves to dispense the flowable substance and is made of an elastically deformable plastic, and a second portion (20) having the dispensing opening (14) and being made of a hard plastic.

2. The device according to claim 1, **characterised in that** said applicator unit (22) constitutes a flock of the pipetting tube (12) which, on dispensing the flowable substance from the inner space (16) of the latter, is wetted with the same.

3. The device according to claim 1, **characterised in that** said applicator unit comprises brush hair that is injection-moulded to a face of the pipetting tube encompassing the dispensing opening.

4. The device according to claim 3, **characterised in that** said brush hair is formed by at least one chaplet.

5. The device according to any one of the claims 1 to 4, **characterised in that** said pipetting tube (12') is arranged in an outer tube (24) that has at least two recesses (26A, 26B) for applying a radial pressure on the pipetting tube (12').

## Revendications

1. Dispositif pour l'application d'une substance coulante, comprenant un tube-pipette (12) qui est fabriqué en matière plastique d'un seul tenant, qui présente, à une extrémité, un orifice (14) de distribution dirigeant vers l'environnement et qui est fermé à l'autre extrémité, dans la région de l'orifice (14) de distribution, une unité (22) d'application étant prévue qui peut être mouillée avec la substance coulante, **caractérisé en ce que** le tube-pipette (12) est configuré comme une pièce à deux composants moulée par injection et comprend une première section (18), qui sert pour distribuer la substance coulante et qui est formée de matière plastique élastiquement déformable, et une deuxième section (20), qui comporte l'orifice (14) de distribution et qui est formée de matière plastique rigide.

2. Dispositif selon la revendication 1, **caractérisé en ce que** l'unité (22) d'application constitue un revêtement floqué du tube-pipette (12), qui est mouillé avec la substance coulante lors de la distribution de la même de l'intérieur (16) du tube-pipette.

3. Dispositif selon la revendication 1, **caractérisé en ce que** l'unité d'application comprend des poils de brosse, qui sont moulés à un front du tube-pipette entourant l'orifice de distribution.

4. Dispositif selon la revendication 3, **caractérisé en ce que** les poils de brosse sont formés d'au moins une couronne.

5. Dispositif selon l'une quelconque des revendications 1 à 4, **caractérisé en ce que** le tube-pipette (12') est arrangé dans un tube (24) extérieur, qui comporte au moins deux échancrures (26A, 26B) pour exercer une pression radiale sur le tube-pipette (12').
